# EUROPEAN PATENT SPECIFICATION

(11) **EP 4 293 237 B1**
(45) Date of publication and mention of the grant of the patent: **28.10.2026**
(21) Application number: 22179763.2
(22) Date of filing: 17.06.2022
(51) Int. Cl.: F15B 15/14, F16J 15/3208

(54) **WING FLAP SYSTEM WITH ACTUATOR**
FLÜGELKLAPPENSYSTEM MIT AKTUATOR
SYSTÈME DE VOLETS D'AILE AVEC ACTIONNEUR

(43) Date of publication of application: 20.12.2023
(73) Proprietor: Microtecnica S.r.l., 10126 Turin (IT)
(72) Inventor: RESTUCCIA, Michele, 20133 Milano (IT); MOLINELLI, Dario, 20866 Carnate (IT); MAINO, Franco, 20861 Brugherio (IT)
(74) Representative: Casalonga

(56) References cited:
- WO-A1-2016/037270
- CN-A- 111 609 131
- JP-U- S62 100 309
- JP-U- S62 163 308
- US-A1- 2009 066 034

## Description

The invention relates to actuators and aircraft controls, more particularly to dynamic piston seals for hydraulic actuators. The invention would apply equally to pneumatic actuators, and so the actuators described could be referred to as fluidic actuators.

### Background

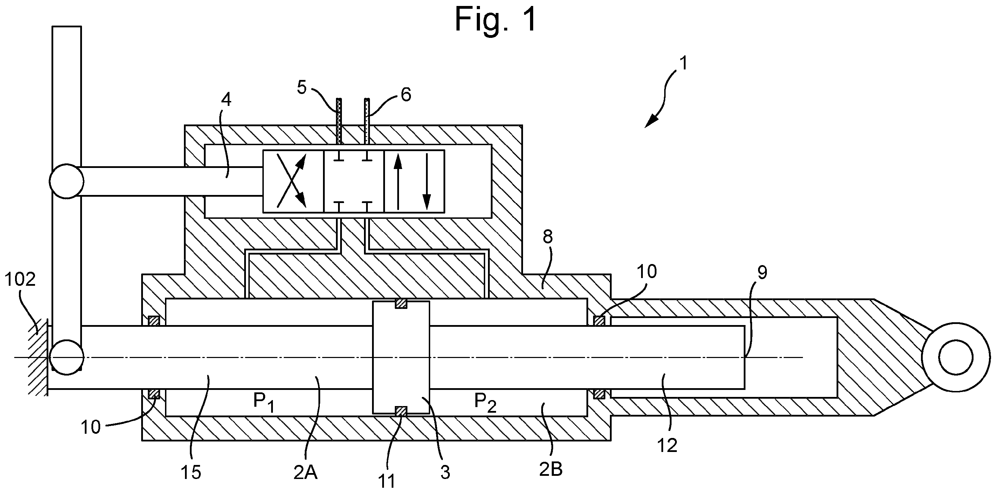

Hydraulic actuators are known in the art. Referring to Figs. 1, 2 and 3, hydraulic actuators may comprise a fixed piston 12 and a movable body or housing 8 surrounding the fixed piston 12. The fixed piston 12 includes a shaft 15 and a piston head 3. Hydraulic fluid chambers 2 are provided on either side of the piston head 3 (e.g., a forward chamber 2B and a reverse chamber 2A).

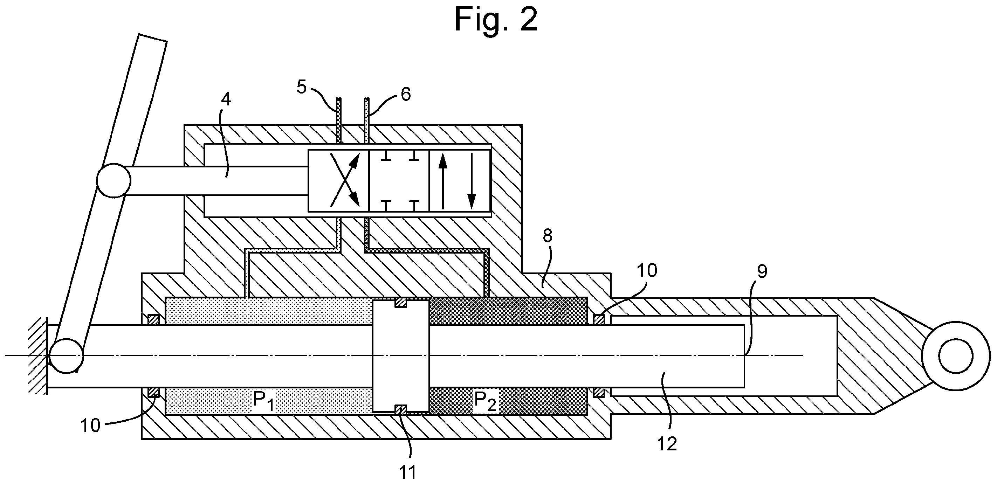

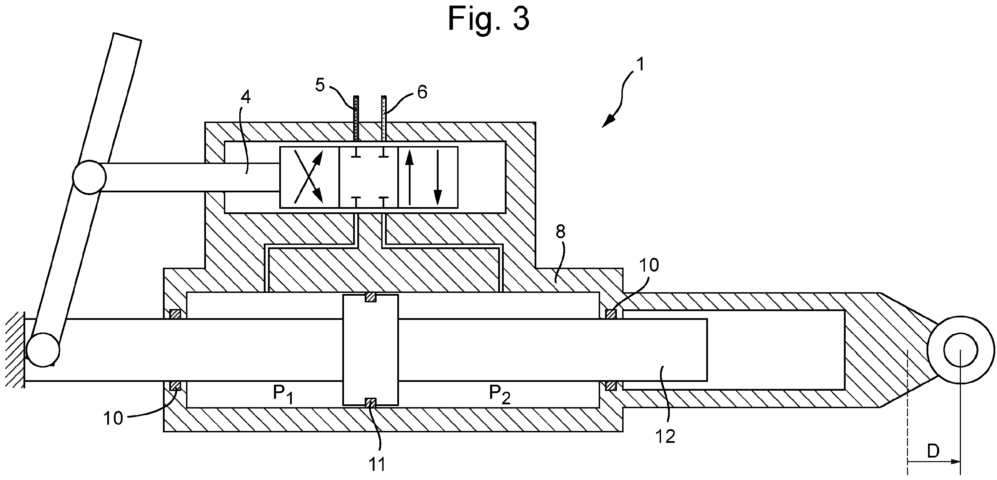

In order to operate the actuator, the actuator housing 8 is moved in a linear direction along the fixed piston 12 (e.g., in a forward or rearward/reverse direction relative to a longitudinal axis 9 of the piston). To initiate this movement, a control or pilot spool 4 is moved from a resting or null position (as shown in Fig. 1), to an active or moving position (as shown in Fig. 2) wherein a fluid (e.g., a high pressure hydraulic fluid) is provided to one of the chambers 2B via a fluid supply 5, whilst the other of the chambers 2A is connected to a fluid return 6 (a fluid exhaust). The fluid supply 5 is at a higher pressure than the fluid return 6 and the corresponding higher pressure and lower pressure is communicated to the corresponding chambers 2B, 2A as chamber pressures P₁, P₂. The resulting pressure difference between the chambers creates a driving force to move the housing 8 in a forward or reverse direction, thereby creating a housing displacement, D, relative to an initial or median position. This movement continues until the pressure between the chambers is equalised (i.e., until P₁ is equal to P₂, generally referred to as the null pressure P₀). As the housing 8 moves the relative position of the control spool 4 to the housing 8 changes such that it returns to a null position (i.e., a new resting position as shown in Fig. 3), wherein the supply of fluid is arrested.

Seals (e.g., ring seals) are provided between the piston 12 and the housing 8 (e.g., between the shaft 15 and the housing 8) at the periphery of the chambers 2 to isolate pressurised fluid within the actuator (e.g., within the chambers 2A, 2B). Seals may additionally be provided between the chambers to prevent leakage between the chambers which may lead to slower response times. To ensure efficient operation and prevent leakage, it is vital that these seals firmly engage with the piston 12 and/or housing 8. Undesirably, however, such firm engagement (i.e. relatively high friction engagement) leads to increased friction which acts against the driving force provided by the pressure difference resulting in a systematic error between a set position and an actual position attained by the actuator housing. The firm engagement between seal and the piston 12 or housing 8 can also cause the seal to deform, extrude and slip or slide within a seal groove which causes the behaviour of the actuator to be unpredictable and unreliable (e.g. the actuator can operate with a sudden and inconsistent lurching movement).

Conventional attempts to improve on actuator performance have focused on maintaining the seal in a fixed position. For example, GB759375A discloses a hydraulic actuator wherein the peripheral surface of the piston is vented to normal atmospheric pressure or a pressure which is below that of the fluid in chamber. As the fluid pressure within the chamber greatly exceeds atmospheric pressure, the sealing rings remain permanently compressed against the inner side walls of their respective grooves. Undesirably, this solution creates a constant stress on the seals with can lead to increased wear and extrusion of the seal. It also increases the firmness of the seal engagement which can lead to a greater residual error, and may lead to increased leakage due to a constant and relatively high pressure differential across the seal. The requirement to vent part of the apparatus to atmosphere also requires significant modification of the actuator, and limits the use of the apparatus (e.g., it cannot be readily used in high pressure environments)

Thus, there remains a need for improved fluidic actuators. The European search report cited US2009/066034A1, WO2016/037270A1, CN111609131A and JPS62163308U as prior art. JPS62100309U discloses another known actuator.

### Summary

In an aspect, wing flap system is provided according to claim 1. The seal comprises a seal body (e.g., a resilient seal body). The energiser is positioned (and, e.g., configured) to bias the seal body against the shaft of the piston (e.g., against a sealing surface).

The pressure relief conduit allows chamber pressure (e.g., the pressure of a fluid within the chamber) to be communicated to the energiser and/or seal body. The chamber pressure can thusly provide an energising pressure (e.g., an additional energising pressure) to the seal body to improve the quality of a seal between the piston and the housing (e.g., a seal formed between the seal body and an opposing sealing surface). This is particularly relevant when the chamber pressure is increased to a relatively high pressure because the likelihood of seal failure (e.g., leakage) is increased at such pressures. The pressure relief conduit also provides an avenue for fluid (e.g., relatively high pressure, or otherwise trapped or encapsulated fluid) around the seal body (e.g., within or adjacent to the energiser) to return to the chamber. In this way unwanted energising pressure (e.g., additional or excess energising pressure) can be relieved from the seal so as not to create undesirable resistance to movement (e.g., due to excess friction between the seal body and an opposing sealing surface). This is particularly relevant when the chamber pressure is reduced (e.g., equalised) below an initial relatively higher pressure, as the seal is less likely to fail under these conditions, and resistance to movement (e.g., the relative movement between the piston and the housing) becomes of greater relevance for high precision operations.

In embodiments, the piston and the housing may be configured to move relative to each other under the action of a or the fluid (e.g. a hydraulic or pneumatic fluid).

The cavity may be continuous (e.g., annular). The cavity may be discontinuous (e.g., comprise a plurality of discrete portions or cavities). The cavity may be configured to hold a fluid communicated from the chamber during use.

The provision of such a cavity allows for a volume of fluid to be retained below the seal body and for improved communication of the chamber pressure to the seal body (e.g., better communication between chamber pressure and energising pressure). The cavity also provides a pressure sink (e.g., a high or low pressure sink provided by a volume of relatively high or low pressure fluid) which can facilitate the dampening of changes in the energising pressure and allow for smoother operation.

The pressure relief conduit may be configured to limit a rate of fluid transfer between the energiser or cavity and the chamber to a given rate of fluid transfer (e.g. a set rate or determined/predetermined rate of fluid transfer).

By limiting or controlling the rate of fluid transfer between the energiser or cavity and the fluid chamber, the rate at which the seal quality and resistance to movement changes can be controlled. The behaviour of the actuator can thusly be controlled to provide more rapid or, conversely, more dampened responses. In this way actuator performance can be tailored to specific applications.

The piston comprises a piston head. The piston head may define a movable boundary of the chamber.

The pressure of fluid acting on the piston head (e.g., on an axial surface area of the piston head) may provide the driving force for the relative movement between the piston and housing.

The seal may be configured to isolate a relatively high pressure fluid within the chamber on a first side of the seal from a relatively low pressure fluid on a second side of the seal (e.g., a side located exterior to the chamber).

The fluid exhaust may have a pressure which is lower than a pressure of the chamber (e.g. a pressure of a fluid within the chamber, or a normal working pressure of the chamber). The fluid exhaust has a pressure (e.g. a fluid pressure) which is lower than a pressure of the fluid supply.

The pressure relief conduit may be formed at least partly in a radially extending surface (e.g., an annular and/or axially facing surface) of the seal groove.

It is believed that forming (e.g., engraving, etching, machining) the pressure relief conduit in a radially extending surface of the seal groove allows for precise control of the conduit, and improves the ease of manufacture, particularly in relatively small and precise actuators and/or in retrofitting operations. More sophisticated surface designs can also be realised in this way.

The pressure relief conduit may extend at least partially in an axial direction through the housing (i.e., a through-hole) between the chamber and the energiser.

Axially extending conduits present with a relatively small or no contact area between the seal body and the conduit. Stated differently, a path of the conduit is not at least partially defined by the seal body (e.g., a resilient seal body). Thus, the seal body or, more particularly, the potential deformation of the seal body has no bearing on the performance of the conduit, and the actuator may provide more reliable (e.g., predictable) performance.

The pressure relief conduit may be formed as a cut or slit through a wall of the seal groove, thereby extending axially between the chamber and the seal body for at least an entire radial distance of the seal body.

In another aspect an aircraft comprising the wing flap system is provided.

In another aspect a method of operating the wing flap system is provided. The method includes supplying a fluid to the one chamber, the fluid having a fluid pressure which is higher or lower than a pressure (e.g., a pressure of another fluid) on a side of the seal which is exterior to the chamber, and moving the piston and the housing relative to each other under the action of the fluid pressure (e.g., the pressure difference between the pressure of the fluid within the chamber and a pressure of a fluid exterior to the chamber).

### Figures

Fig. 1 shows a schematic of a hydraulic actuator (e.g., in accordance with conventional arrangements and embodiments of the invention) in a resting position.
Fig. 2 shows a schematic of a hydraulic actuator (e.g. the actuator of Fig. 1) in an active position.
Fig. 3 shows a schematic of a hydraulic actuator (e.g. the actuator of Fig. 1 or 2) in a displaced position.
Fig. 4A shows a dynamic seal for a hydraulic actuator wherein a chamber is in a pressurised state.
Fig. 4B shows the dynamic seal of Fig. 4A wherein the chamber is in an equalised state.
Fig. 5A and 5B show residual errors in housing displacement and control spool position when employing the seal of Fig. 4A.
Fig. 6 shows a dynamic seal in accordance with embodiments.
Fig. 7 shows another dynamic seal in accordance with embodiments.
Fig. 8 shows the performance characteristics of a dynamic seal in accordance with embodiments.
Fig. 9 shows the performance characteristics of another dynamic seal in accordance with embodiments.
Fig. 10 shows an aircraft in accordance with embodiments.

### Detailed description

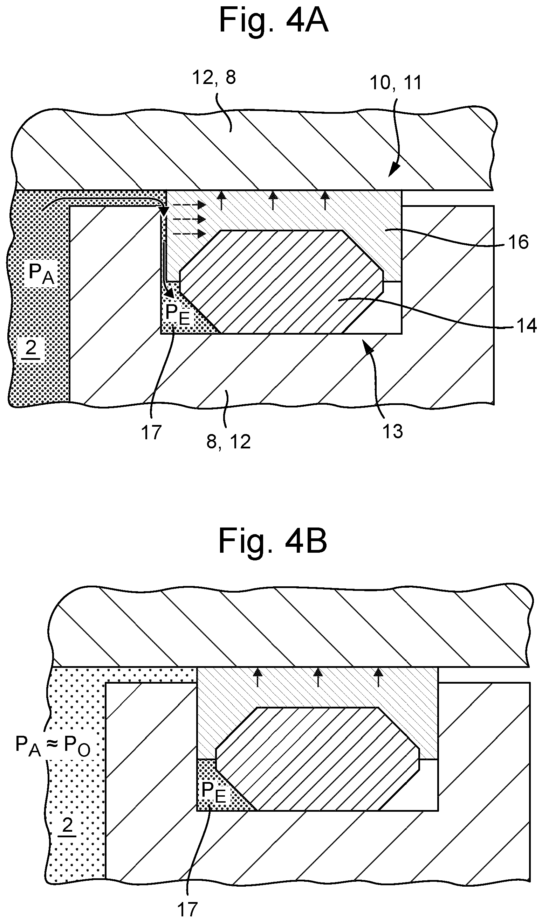

Initial attempts to improve on the residual error have focussed on the use of dynamic seals 10, 11 including a seal body 16 and seal energiser 14 provided in a seal groove 13 surrounding the piston 12 (see Figs. 4A and 4B). Each of the seal body 16, seal energiser 14 and the seal groove 13 may be annular in shape. However, other shapes and configurations are also envisaged (e.g., a cuboid piston may be used in conjunction with four separate linear dynamic seals, or may comprise dynamic seals on some surfaces but not on others). Similarly, the seal body 16 may comprise a continuous (e.g., annular) shape and the seal energiser 14 may be discontinuous (e.g., comprise a plurality of energising elements which are interconnected or discrete from one another). The seal body 16 may be sized to fit a width of the groove 13 (e.g., to have a seal width which is be equal to the width of the groove 13). The seal body 16 may comprise a resilient material. Selecting appropriate sizing and materials for the seal body 16 can help prevent the seal from moving freely within the groove 13, thereby preventing slippage of the piston and positional inaccuracies. The seal energiser 14 applies pressure on the seal body 16 in a radial direction, so as to improve the sealing quality between the piston 12 and the housing 8 (e.g., by increasing friction between the seal body 16 and an opposing sealing surface). The seal energiser 14 may comprise a width which is less than a width of the seal groove 13. A cavity 17 (free space or vacancy) may be provided between the seal groove 13, the seal body 16 and the seal energiser 14. The cavity 17 may span the width of the seal groove 13 (e.g., connecting forward and rear/reverse sides of the seal groove). Alternatively, the cavity 17 may be confined to a side (e.g., forward or reverse side) of the seal groove 13. Corresponding cavities 17 may be provided on both sides (e.g., forward or reverse sides) of the energiser 14.

The seal groove 13 is provided in the housing 8 with the seal body 16 positioned radially inwardly of the seal energiser 14 such that it is biased against the piston 12.

With reference to Fig. 4A, during operation of the hydraulic actuator, and when a relatively high pressure fluid is communicated with one of the chambers 2 (e.g., the forward chamber 2B is in a pressurised state), the correspondingly high chamber pressure P₁, P₂ (generally referred to as P_{A}), is communicated to the seal body 16 (e.g., via an annular axial channel defined between the piston 12 and housing 8). The communication of this relatively high chamber pressure P_{A} to the seal body 16 causes the seal body 16 to deform (e.g., periodically compress) and high pressure fluid to enter the seal groove 13 housing the energiser 14. Advantageously, this causes the chamber pressure P_{A} to be communicated to the seal groove 13 (e.g. to a cavity 17 defined between the seal groove 13, the seal body 16 and the seal energiser 14) and creates an additional energising pressure, P_{E}, on the seal body 16. The provision of this energising pressure P_{E} occurs in concert with the presence of relatively high chamber pressure P_{A}. Thus, the firmness of the seal 10, 11 engagement (i.e. the friction between the seal 10, 11 and an opposing sealing surface) is modulated with the chamber pressure P_{A} and the driving force of the actuator 1. The increased friction is not detrimental when there is a high pressure, as the high pressure creates proportionally high driving force. This reduces the positional error and allows for much smoother operation since the magnitude of the resistance to movement increases and decreases relative to the driving force for movement.

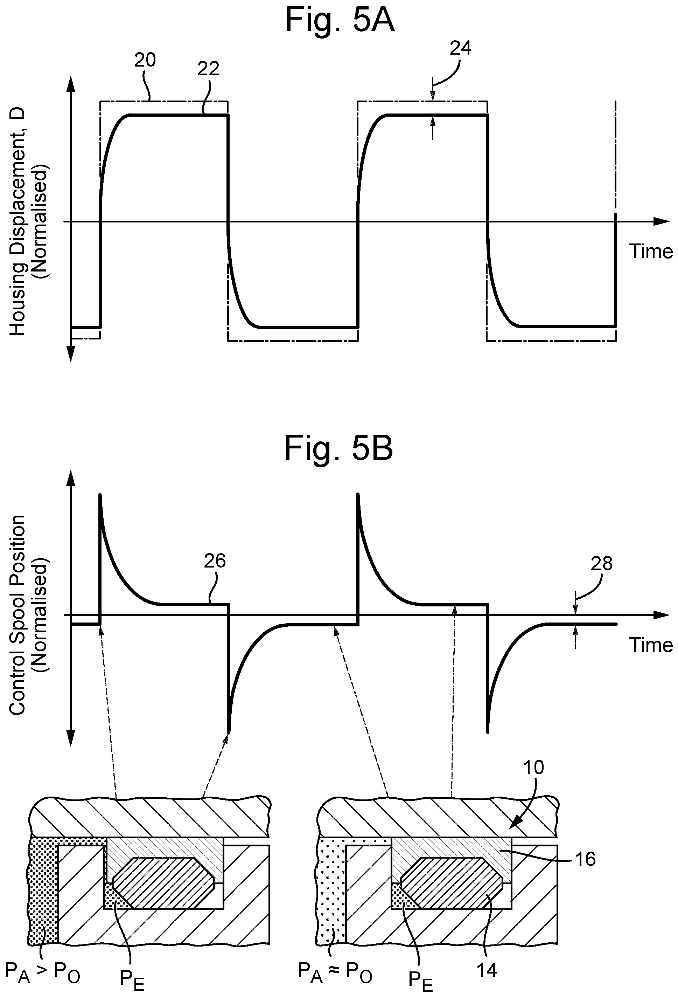

It has been found that when the pressure between chambers equalises, such that chamber pressure P_{A} is reduced towards the null pressure P₀, the seal body 16 recovers from deformation. As the seal body 16 is no longer deformed, the chamber pressure P_{A} is no longer communicated to the seal groove 13 or cavity 17 meaning that higher pressure fluid is effectively trapped behind the seal body 16. The energising pressure P_{E} is therefore greater than the chamber pressure P_{A} (see Fig. 4B), which means that the seal 10, 11 engagement remains firmer than necessary. As a result, and with reference to Fig. 5A, excess friction causes a small residual error 24 to remain.

Fig. 5A shows the positional behaviour of a hydraulic actuator with dynamic seals 10, 11 as it is repeatedly moved between a forward position and a rear position. Here it can be seen that the output or actual position 22 of the actuator closely follows the input or set point position 20 of the actuator (e.g., as set by a controller or operator). However, though a step change is provided at the input 20, the change in output position 22 instead slows slightly as it approaches the set point (exaggerated for illustrative purposes). The output position also fails to reach the set point with a residual error 24 present in both the forward and reverse step changes. It is believed that these residual errors are the product of the aforementioned trapped fluid occurring in the corresponding forward and rear seals causing excess friction between the piston 12 and housing 8.

Fig. 5B shows the corresponding position of the control spool 26 (normalised relative to the actuator pressure) when the actuator is repeatedly moved between a forward position and a rear position as in Fig. 5A. Here it can be seen that, following its initial step change, the control spool 4 does not fully return its null position such that it presents an offset 28 from the null position as a result of the residual error of the housing position. This offset 28 can cause further problems when the actuator 1 is next commanded to move. For example, if the output position of the actuator has to be finely tuned (e.g., in high precision aircraft operations), an initial offset in the opposite direction to travel (e.g., forward instead of reverse) can create a response delay. Similarly, the response can be unexpectedly fast if an offset is present is the same direction of travel. This can create undesirable variation in the performance of the actuator 1.

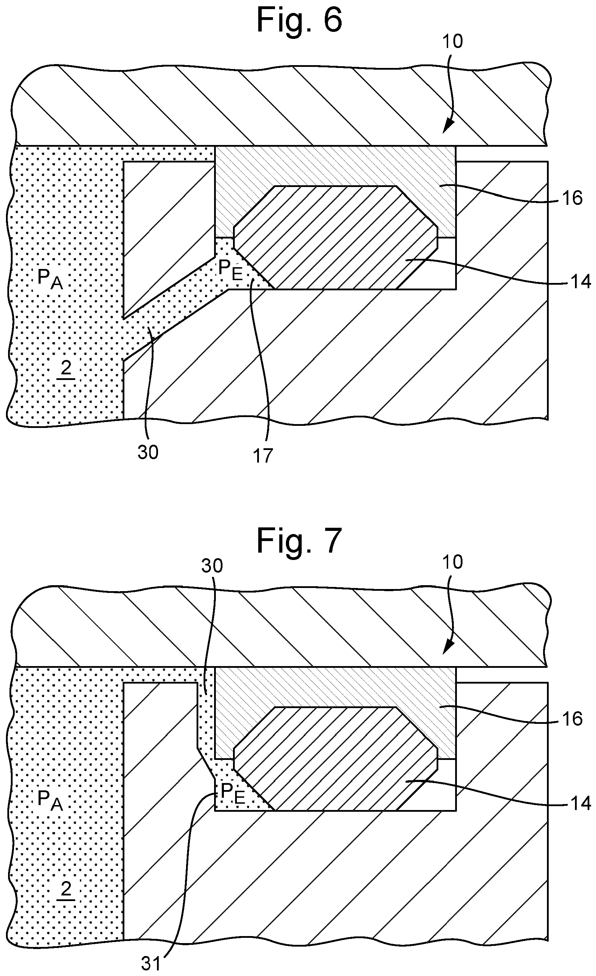

As shown in Figs. 6 and 7, in order to further improve on actuator 1 performance, and to better modulate seal engagement with the piston 12 and/or housing 8, one or more pressure relief features (or pressure communication features) are provided within the seal groove 13. The pressure relief features comprise one or more pressure relief conduits 30.

The pressure relief features serve to better communicate the chamber pressure P_{A} with the energising pressure P_{E}. In so doing, energising pressure P_{E} does not become "trapped" within the seal groove (e.g., within a cavity 17 defined between the seal groove 13, the seal body 16 and the seal energiser 14) and the residual error caused by unintentional energising of the seal is eliminated.

The pressure relief conduit 30 may comprise a channel or passage extending in a generally axial direction (e.g., parallel to the piston axis 9). The channel or passage direction may also comprise a radial component (see Fig. 6).

Alternatively, the pressure relief conduit may be formed at least partly on a surface of the seal groove 13. For example, the pressure relief conduit 30 may be formed (e.g., drilled, etched or engraved) in a radially-extending side face 31 (forward or rear annular face) of the seal groove (see Fig. 7 which shows a cross section intersecting a radially extending pressure relief conduit 30). Similarly, the pressure relief conduit may be formed as a cut or slit through a wall (e.g., an entire axial width of a wall) of the seal groove, thereby extending axially between the chamber and the seal body for at least an entire radial distance of the seal body (not shown).

The pressure relief conduit 30 may be provided at the point of manufacture of the actuator. Alternatively, the pressure relief conduit 30 may be formed by modifying an existing actuator 1. For example, the pressure relief conduit 30 may be introduced (e.g. retrofitted) during a maintenance operation of an actuator 1, so as to improve the actuator's performance. The conduit 30 may link with the chamber 2 via an annular axial channel (e.g., a channel defined between the piston 12 and housing 8, see Fig. 7).

It has been found that placing the pressure relief conduit 30 in the seal groove, as opposed to placing a pressure relief feature in the seal body 16 itself, leads to greatly enhanced performance. This is because modifying the seal body 16 can give rise to unpredictable results and reduce the integrity of the seal, leading to increase wear and maintenance requirements of the actuator. Further, as the seal body may comprise resilient material, any pressure relief features formed therein may deform and act unpredictably. It is also more difficult to tune the response behaviour of the pressure relief feature when present in the seal body, as the behaviour of the seal body may change with time.

Placing the pressure relief feature in the seal groove 13 of the housing also allows for enhanced tuning of the performance and behaviour of the actuator. For example, because the piston and/or housing is typically manufactured from an inelastic material (e.g., a metallic material), it is possible to form highly defined (micrometre or nanometre scale) features therein. Thus, the communication between the seal groove 13 or cavity 17 and the chamber 2 can be metered and tuned so as to control the speed at which the chamber pressure P_{A} and energising pressure P_{E} equalise.

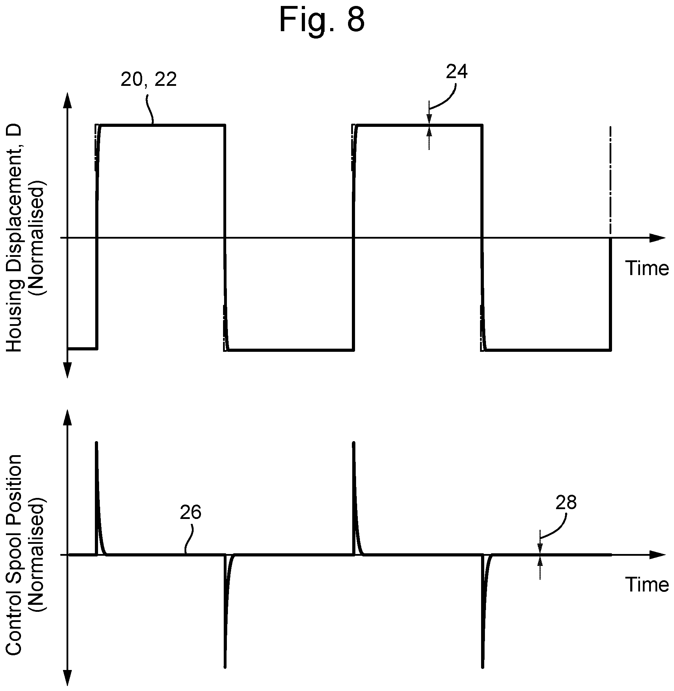

With reference to Figs. 6 and 8, when a relatively large channel is employed as a pressure relief conduit 30 (as illustrated in Fig. 6), the chamber pressure P_{A} and energising pressure P_{E} are freely communicated with each other. In this case the actuator will exhibit a rapid (near instant) response time as the energising pressure P_{E} is quickly reduced with chamber pressure such that the seal firmness is synchronised with the pressure difference between forwards and reverse chambers 2A, 2B. Thus, the driving force for moving the housing is synchronised with the resistance to movement such that a low resistance is present when the chamber pressure P_{A} is reduced towards the null pressure P₀. Accordingly, the housing can continue to move without significant resistance to the set point and, consequently, no residual error 24 is present between the input or set point position 20 and the output or actual position 22 of the housing. Similarly, the control spool 4 is allowed to move to its null position such that no offset 28 is present and the undesirable variation in the performance of the actuator can be abated.

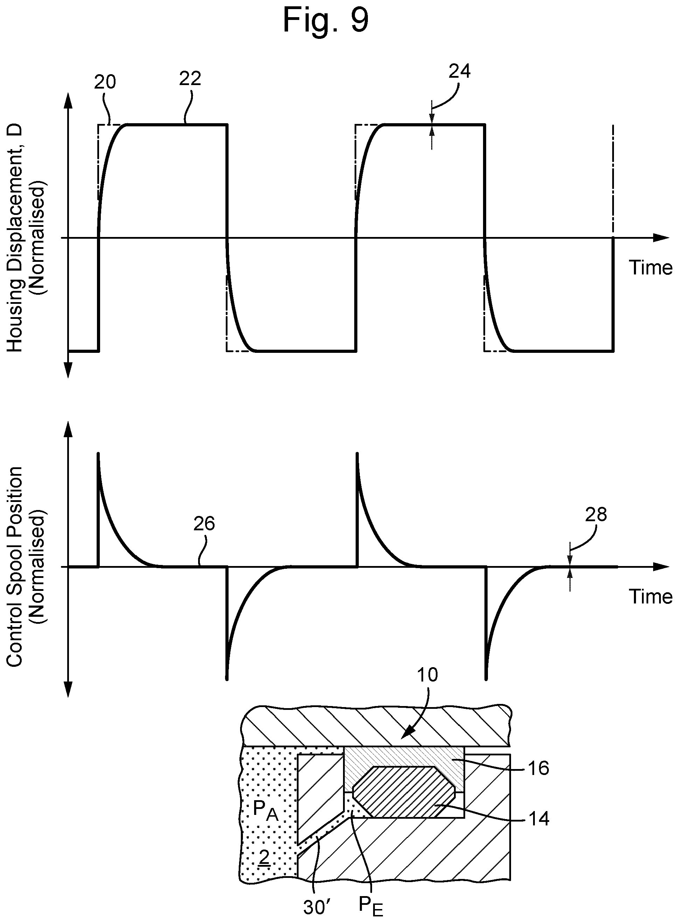

Alternatively, as illustrated in Fig. 9, when a relatively smaller channel is employed as a pressure relief conduit 30 (here denoted as 30'), the flow between the seal groove 13 or cavity 17 and chamber 2 can be constricted. Stated differently, the pressure relief conduit 30 can be configured to limit the rate of fluid transfer between the energiser 14 and the chamber 2 to a set or given rate of fluid transfer. In this way the rate of equalisation between chamber pressure P_{A} and energising pressure P_{E} can be reduced to a relatively slower rate. Here, again, the housing 8 can continue to move to the set point such that no residual error 24 is present, but it may take longer to do so. In this way the actuator 1 can be configured to create a dampened response (e.g. inertial dampening, or "soft closing") which may be preferential in certain applications where relatively rapid and high inertia movements are detrimental (e.g., heavy machinery). Again, the control spool 4 is allowed to move to its null position (albeit over a longer period of time) such that no offset 28 is present and the undesirable variation in the performance of the actuator can be abated.

It is contemplated that many other techniques may be used to tune the response of the actuator. The size and frequency of the pressure relief conduits 30 can be modified to tailor response behaviour of movable housing. Similarly, shape of the pressure relief conduit 30 can be modified (e.g., v-shaped groove, conical passage) so as to modify the response behaviour. If a channel is used as pressure relief conduit 30, the channel may be a straight channel or a curved channel. The channel may have a constant cross-section or a variable cross-section. For example, the channel may constrict to a narrow orifice or nozzle.

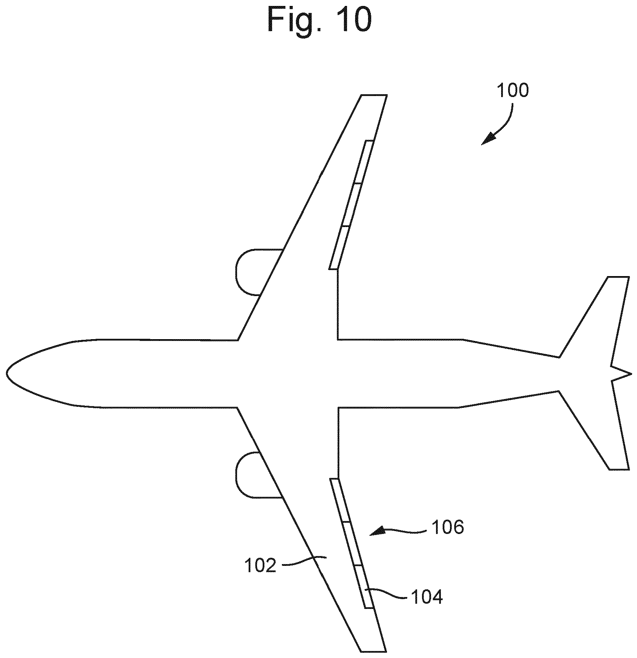

Used herein the term "fixed" is intended to define an element which is secured to a first (e.g., major) body (e.g., a wing 102 on an aircraft 100, as shown in Fig. 10). Similarly, the term "movable" is intended to define an element which is secured to a second (e.g., minor) body which is movable relative to the first body (e.g., a flap 104). Embodiments include an aircraft 100 comprising the described actuators. Whilst exemplary embodiments have been described in relation to a fixed piston and movable housing, it should be noted that the disclosed seal configurations may equally be applied to the reverse configuration of a fixed housing and movable piston. Although described as fixed, it should also be appreciated that the fixed element (piston or housing) may be pivotally attached to a fixed structure (e.g., an aircraft bulkhead - not shown).

Further, one or more pressure relief conduits 30 may be provided only on one side (e.g., forward or rear) of the seal groove 13, or may be provided on both sides of the seal groove 13 (e.g., to corresponding cavities 17 on either side of the energiser 14). For example, when employing the described seal configuration between chambers 2 (e.g., circumscribing the piston head 3), it may be beneficial to communicate both chambers 2A, 2B to respective sides of the seal groove 13 such that the energising pressure P_{E} may be provided from either of the chambers 2A, 2B (e.g., from which ever of the chambers is in communication with the relatively high pressure supply 5).

The teachings herein may also be applied to other fluidic actuators known in the art, e.g., pneumatic actuators.

## Claims

1. A wing flap system comprising a wing, a flap and an actuator, the actuator comprising:
a housing (8) comprising two chambers (2) for holding a fluid;
a piston (12) comprising a shaft (15), a piston head (3) and an axis (9), the piston (12) positioned partially within the chambers (2), the chambers being provided on either side of the piston head (3);
a control spool (4), wherein the control spool (4) is configured to selectively communicate a fluid supply (5) with one of the chambers (2), such that a pressure within the one chamber (20) increases, wherein the control spool (4) is configured to selectively communicate a fluid exhaust (6) with the other chamber (2), the fluid exhaust (6) having a pressure which is lower than a pressure of the fluid supply (5);
a seal (10) positioned between the shaft (3) of the piston (12) and the housing (8), the seal (10) configured to isolate a fluid in a corresponding chamber (2) so as to isolate the fluid within the actuator and prevent leakage from the actuator;
wherein the piston (12) and the housing (8) are configured to move relative to each other along the axis (9);
wherein the control spool (4) is configured to operate the actuator when moving from a null position to an active position wherein the pressure of the supply fluid is provided to the one chamber whilst the other chamber is connected to the fluid exhaust,
wherein as the housing (8) or the piston (12) moves, the relative position of the control spool (4) to the housing (8) changes such that it returns to a null position wherein the supply of fluid is arrested,
wherein the housing (8) comprises a seal groove (13) in which the seal (10) is positioned, the seal comprising a seal body (16) and an energiser (14), wherein a cavity (17) is defined between the seal groove (13), the seal body (16) and the energiser (14), the energiser (14) biasing the seal body (16) against the shaft (15) of the piston (12);
wherein the actuator comprises at least one pressure relief conduit (30) located between the energiser (14) and the corresponding chamber (2), and configured to relieve fluid pressure built up in the region between the energiser (14) and the corresponding chamber (2);
wherein the pressure relief conduit (30) is configured to fluidly communicate the chamber (2) with the cavity (17).

2. A wing flap system according to claim 1, wherein the piston (12) and housing (8) are configured to move relative to each other under the action of the fluid.

3. A wing flap system according to claim 1 or 2, wherein the pressure relief conduit (30) is configured to limit a rate of fluid transfer between the cavity (17) and the corresponding chamber (2) to a given rate of fluid transfer.

4. A wing flap system according to any preceding claim, wherein the seal (10) is configured to isolate a relatively high pressure fluid within the corresponding chamber (2) on a first side of the seal from a relatively low pressure fluid on a second side of the seal.

5. A wing flap system according to any preceding claim, wherein the pressure relief conduit (30) is formed in a radially extending surface of the seal groove.

6. A wing flap system according to any preceding claim, wherein the pressure relief conduit (30) extends at least partially in an axial direction through the housing between the corresponding chamber and the energiser.

7. An aircraft comprising a wing flap system in accordance with any of claims 1-6.

8. A method of operating a wing flap system according to any of claims 1-6, comprising:
supplying a fluid to the one chamber (2), the fluid having a fluid pressure which is higher than a pressure on a side of the seal (10) which is exterior to the chamber (2);
moving the piston (12) and the housing (8) relative to each other under the action of the fluid pressure.

## Patentansprüche

1. Flügelklappensystem, umfassend einen Flügel, eine Klappe und einen Aktuator, wobei der Aktuator umfasst:
ein Gehäuse (8), das zwei Kammern (2) zum Halten eines Fluids umfasst;
einen Kolben (12), der eine Welle (15), einen Kolbenkopf (3) und eine Achse (9) umfasst, wobei der Kolben (12) teilweise innerhalb der Kammern (2) positioniert ist, wobei die Kammern auf beiden Seiten des Kolbenkopfs (3) vorgesehen sind;
einen Steuerschieber (4), wobei der Steuerschieber (4) so eingerichtet ist, dass er selektiv eine Fluidzufuhr (5) mit einer der Kammern (2) verbindet, so dass ein Druck innerhalb der einen Kammer (20) ansteigt, wobei der Steuerschieber (4) so eingerichtet ist, dass er selektiv einen Fluidauslass (6) mit der anderen Kammer (2) verbindet, wobei der Fluidauslass (6) einen Druck aufweist, der niedriger ist als ein Druck der Fluidzufuhr (5);
eine Dichtung (10), die zwischen der Welle (3) des Kolbens (12) und dem Gehäuse (8) positioniert ist, wobei die Dichtung (10) so eingerichtet ist, dass sie ein Fluid in einer entsprechenden Kammer (2) isoliert, um das Fluid innerhalb des Aktuators zu isolieren und Leckagen aus dem Aktuator zu verhindern;
wobei der Kolben (12) und das Gehäuse (8) so eingerichtet sind, dass sie sich relativ zueinander entlang der Achse (9) bewegen;
wobei der Steuerschieber (4) so eingerichtet ist, dass er den Aktuator beim Bewegen von einer Nullposition in eine aktive Position betätigt, wobei der Druck des Versorgungsfluids der einen Kammer bereitgestellt wird, während die andere Kammer mit dem Fluidauslass verbunden ist,
wobei sich während der Bewegung des Gehäuses (8) oder des Kolbens (12) die relative Position des Steuerschiebers (4) zum Gehäuse (8) ändert, so dass er in eine Nullposition zurückkehrt, in der die Zufuhr von Fluid gestoppt wird,
wobei das Gehäuse (8) eine Dichtungsnut (13) umfasst, in der die Dichtung (10) positioniert ist, wobei die Dichtung einen Dichtungskörper (16) und einen Energiegeber (14) umfasst, wobei ein Hohlraum (17) zwischen der Dichtungsnut (13), dem Dichtungskörper (16) und dem Energiegeber (14) definiert ist, wobei der Energiegeber (14) den Dichtungskörper (16) gegen die Welle (15) des Kolbens (12) vorspannt:
wobei der Aktuator mindestens eine Druckentlastungsleitung (30) umfasst, die sich zwischen dem Energiegeber (14) und der entsprechenden Kammer (2) befindet und so eingerichtet ist, dass sie den Fluiddruck entlastet, der sich im Bereich zwischen dem Energiegeber (14) und der entsprechenden Kammer (2) aufgebaut hat;
wobei die Druckentlastungsleitung (30) so eingerichtet ist, dass sie die Kammer (2) fluidisch mit dem Hohlraum (17) verbindet.

2. Flügelklappensystem nach Anspruch 1, wobei der Kolben (12) und das Gehäuse (8) so eingerichtet sind, dass sie sich unter der Wirkung des Fluids relativ zueinander bewegen.

3. Flügelklappensystem nach Anspruch 1 oder 2, wobei die Druckentlastungsleitung (30) so eingerichtet ist, dass sie eine Fluidtransferrate zwischen dem Hohlraum (17) und der entsprechenden Kammer (2) auf eine gegebene Fluidtransferrate begrenzt.

4. Flügelklappensystem nach einem der vorhergehenden Ansprüche, wobei die Dichtung (10) so eingerichtet ist, dass sie ein relativ hohes Druckfluid innerhalb der entsprechenden Kammer (2) auf einer ersten Seite der Dichtung von einem relativ niedrigen Druckfluid auf einer zweiten Seite der Dichtung isoliert.

5. Flügelklappensystem nach einem der vorhergehenden Ansprüche, wobei die Druckentlastungsleitung (30) in einer sich radial erstreckenden Fläche der Dichtungsnut ausgebildet ist.

6. Flügelklappensystem nach einem der vorhergehenden Ansprüche, wobei sich die Druckentlastungsleitung (30) mindestens teilweise in axialer Richtung durch das Gehäuse zwischen der entsprechenden Kammer und dem Energiegeber erstreckt.

7. Luftfahrzeug, das ein Flügelklappensystem nach einem der Ansprüche 1 bis 6 umfasst.

8. Betriebsverfahren für ein Flügelklappensystem nach einem der Ansprüche 1 bis 6, das Folgendes umfasst:
Zuführen eines Fluids in die eine Kammer (2), wobei das Fluid einen Fluiddruck aufweist, der höher ist als ein Druck auf einer Seite der Dichtung (10), die sich außerhalb der Kammer (2) befindet;
Bewegen des Kolbens (12) und des Gehäuses (8) relativ zueinander unter Wirkung des Fluiddrucks.

## Revendications

1. Système de volet d'aile comprenant une aile, un volet et un actionneur, l'actionneur comprenant :
un logement (8) comprenant deux chambres (2) de rétention d'un fluide ;
un piston (12) comprenant un arbre (15), une tête de piston (3) et un axe (9), le piston (12) étant positionné partiellement à l'intérieur des chambres (2), les chambres étant prévues de part et d'autre de la tête de piston (3) ;
un tiroir de commande (4), dans lequel le tiroir de commande (4) est configuré pour faire communiquer sélectivement une alimentation en fluide (5) avec une première des chambres (2), de sorte qu'une pression à l'intérieur de la première chambre (20) augmente, dans lequel le tiroir de commande (4) est configuré pour faire communiquer sélectivement un échappement de fluide (6) avec l'autre chambre (2), l'échappement de fluide (6) présentant une pression inférieure à une pression de l'alimentation en fluide (5) ;
un joint (10) positionné entre l'arbre (3) du piston (12) et le logement (8), le joint (10) étant configuré pour isoler un fluide dans une chambre (2) correspondante de manière à isoler le fluide à l'intérieur de l'actionneur et à empêcher une fuite depuis l'actionneur ;
dans lequel le piston (12) et le logement (8) sont configurés pour se déplacer l'un par rapport à l'autre le long de l'axe (9) ;
dans lequel le tiroir de commande (4) est configuré pour actionner l'actionneur lors du déplacement d'une position nulle vers une position active, dans lequel la pression du fluide d'alimentation est fournie à la première chambre tandis que l'autre chambre est reliée à l'échappement de fluide,
dans lequel, au fur et à mesure que le logement (8) ou le piston (12) se déplace, la position relative du tiroir de commande (4) par rapport au logement (8) change de manière à revenir à une position nulle dans laquelle l'alimentation en fluide est arrêtée,
dans lequel le logement (8) comprend une rainure d'étanchéité (13) dans laquelle le joint (10) est positionné, le joint comprenant un corps d'étanchéité (16) et un excitateur (14), dans lequel une cavité (17) est définie entre la rainure d'étanchéité (13), le corps d'étanchéité (16) et l'excitateur (14), l'excitateur (14) sollicitant le corps d'étanchéité (16) contre l'arbre (15) du piston (12) :
dans lequel l'actionneur comprend au moins un conduit de décharge de pression (30) situé entre l'excitateur (14) et la chambre (2) correspondante, et configuré pour décharger une pression de fluide accumulée dans la région entre l'excitateur (14) et la chambre (2) correspondante ;
dans lequel le conduit de décharge de pression (30) est configuré pour faire communiquer de manière fluidique la chambre (2) avec la cavité (17).

2. Système de volet d'aile selon la revendication 1, dans lequel le piston (12) et le logement (8) sont configurés pour se déplacer l'un par rapport à l'autre sous l'action du fluide.

3. Système de volet d'aile selon la revendication 1 ou 2, dans lequel le conduit de décharge de pression (30) est configuré pour limiter un taux de transfert de fluide entre la cavité (17) et la chambre (2) correspondante à un taux de transfert de fluide donné.

4. Système de volet d'aile selon une quelconque revendication précédente, dans lequel le joint (10) est configuré pour isoler un fluide à pression relativement élevée à l'intérieur de la chambre correspondante (2) au niveau d'un premier côté du joint par rapport à un fluide à pression relativement basse au niveau d'un second côté du joint.

5. Système de volet d'aile selon une quelconque revendication précédente, dans lequel le conduit de décharge de pression (30) est formé dans une surface s'étendant radialement de la rainure d'étanchéité.

6. Système de volet d'aile selon une quelconque revendication précédente, dans lequel le conduit de décharge de pression (30) s'étend au moins partiellement dans une direction axiale à travers le logement entre la chambre correspondante et l'excitateur.

7. Aéronef comprenant un système de volet d'aile selon l'une quelconque des revendications 1 à 6.

8. Procédé d'actionnement d'un système de volet d'aile selon l'une quelconque des revendications 1 à 6, comprenant :
l'alimentation d'un fluide dans la première chambre (2), le fluide présentant une pression de fluide qui est supérieure à une pression au niveau d'un côté du joint (10) qui est extérieur à la chambre (2) ;
le déplacement du piston (12) et du logement (8) l'un par rapport à l'autre sous l'action de la pression de fluide.
